# EUROPÄISCHE PATENTANMELDUNG

(11) **EP 2 868 960 A1**
(43) Veröffentlichungstag der Anmeldung: **06.05.2015**
(21) Anmeldenummer: 14190983.8
(22) Anmeldetag: 30.10.2014
(51) Int. Cl.: F16T 1/00

(54) **Ablasssystem mit Kontrollrohr für die Kondensationswärmetauscher**

(30) Priorität: 04.11.2013 TR 201312729
(71) Anmelder: Robert Bosch GmbH, 70442 Stuttgart (DE)
(72) Erfinder: Sonmezisik, Fuat, 70469 Stuttgart (DE); Akdari, Erden, 5198 Izmir (TR); Demir, Sukru, 70469 Stuttgart (DE)

(57) **Zusammenfassung**

Die Erfindung betrifft ein an den Kondensationswärmetauscher (20) angeschlossenes Ablasssystem (30) mit einem Siphon (31) und mit mindestens einem an das Siphon (31) angeschlossenen Siphonrohr (32) zum Ablass der Kondensflüssigkeit des Wärmetauschers (20), dadurch gekennzeichnet, dass es mindestens ein Kontrollrohr (34) auf dem genannten Siphon (31) umfasst.

## Beschreibung

### Technischer Bereich

Die Erfindung betrifft ein Ablasssystem, das die Störungen bei der Installation der Brennwert-Kombiheizgeräte beseitigt und durch die einwandfreie Installation die Kundenzufriedenheit erhöhen soll.

Die Erfindung betrifft insbesondere ein Ablasssystem, das verhindern soll, dass das Kondenswasser wegen der Rohrbiegung an den verschiedenen Gas-Kondensationswärmetauschern, die von Haushalten oder Betrieben benutzt werden, sich nicht entleeren kann.

### Stand der Technik

Die Kondensationswärmetauscher werden heutzutage vielerorts bevorzugt. Dies bedeutet wiederum mehr Vertriebs- und Montageaufwand und gleichzeitig mehr Kundenerwartungen, wobei es immer schwieriger wird, die Kundenzufriedenheit zu erreichen. Insbesondere bei der Montage haben die Positionen der Rohre der Kondensationswärmetauscher hinsichtlich des Arbeitsprinzips eine wichtige Bedeutung.

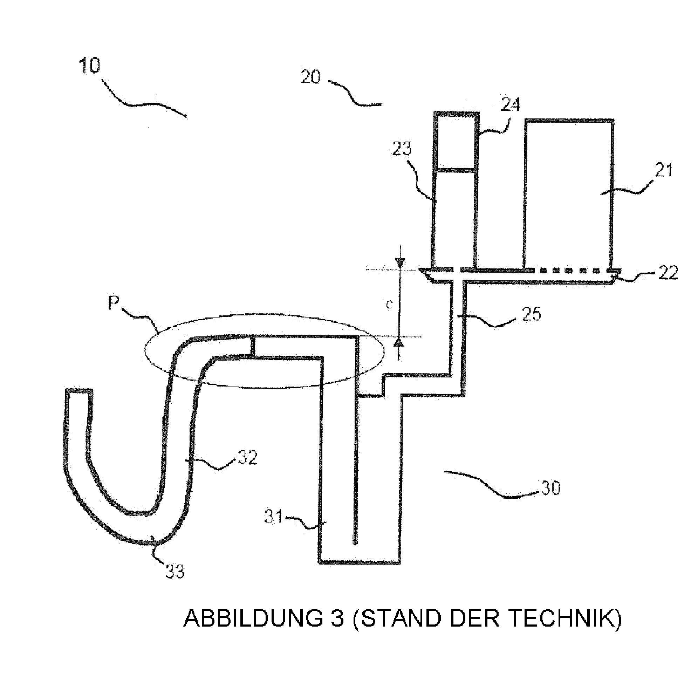

Beim Betrieb der Kondensationswärmetauscher ist der Ablass (Drainage) des Kondenswassers vom Heizgerät notwendig. Diese Drainage wird durch ein Ablasssystem gewährleistet, das an den Kondensationswärmetauscher angeschlossen wird. Bei einem fehlerhaften Anschluss des Siphonrohres des Ablasssystems entsteht eine Biegung (33) am Siphonrohr, wie in der Abbildung 3 dargestellt. Aufgrund dieser Biegung kann die Drainage des Kondenswassers nicht ganz stattfinden, sodass das Wasser, das aus dem System nicht abgelassen wird, sich im Abgasrohr, in der Brennkammer und in der Kondensationskammer ansammelt und dadurch das System blockiert wird und nicht mehr funktioniert.

Wegen dieser Biegung entsteht ein Unterdruckbereich (P), wie in der Abbildung 3 dargestellt. Dieser Unterdruck verhindert die Drainage des Kondenswassers, indem der Druck des Kondenswassers den Luftdruck unterschreitet. In diesem Fall sammelt sich das Restwasser im Wärmetauscher an. So schaltet sich der Wärmetauscher automatisch ab, da sich das Kondenswasser in der Kondensationskammer ansammelt und dadurch der Abgasaustritt verhindert wird.

Im Stand der Technik gibt es keine Lösung, die die Stauung im Siphonrohr beseitigen kann. Es wird versucht, dieses Stauungsproblem dadurch zu vermeiden, dass lediglich die Rohrbiegung während der Installation verhindert wird. Eine Fehlinstallation kann aber jederzeit passieren und die Probleme, die dadurch verursacht werden, können leider erst durch den Eingriff des Kundendienstes gelöst werden. Die dadurch entstandenen Sicherheitsprobleme, Zeitverluste und Kosten beeinträchtigen zudem die Kundenzufriedenheit.

Der Wärmetauscher schaltet sich automatisch ab, auch wenn keine Biegung der Fall ist, aber dafür sich Schmutz, Kalk etc. in den Siphonrohren ansammeln. In diesem Fall kann es vorkommen, dass das Kondenswasser in das Heizsystem eintritt/außerhalb des Heizsystems austritt.

Um diese Probleme zu vermeiden, gibt es verschiedene Patent- und/oder Gebrauchsmusteranmeldungen.

Eine von diesen Anmeldungen ist ein Gebrauchsmuster mit der Nummer TR 2012/12091 und beschreibt ein Ablasssystem zur Drainage der Kondensflüssigkeiten aus dem System. Bei diesem System wird versucht, die Biegung des Siphonrohres dadurch zu vermeiden, dass das Siphonsystem in das Kombisystem integriert wird.

Die Gebrauchsmusteranmeldung mit der Nummer CN202868313 beschreibt wiederum ein automatisches Drainagesystem, das zur Drainage des Kondenswassers konzipiert ist. Bei dieser Erfindung werden eine Drainageöffnung unterhalb des Hauptgasrohres und ein Ventilanschluss am Hauptgasrohr vorgesehen. Dabei wird der obere Teil des Gasrohres an diese Drainageöffnung und der untere Teil an einen Wassertank angeschlossen.

Diese Anmeldungen bieten zwar verschiedene Lösungen für die Drainage der Kondensflüssigkeit an, jedoch keine Lösungen für die Sicherheitsprobleme, die bei der Installation des Ablasssystems innerhalb des Kombisystems entstehen können.

Dagegen werden diese Sicherheitsprobleme bei unserer Erfindung dadurch gelöst, dass das Siphonsystem außerhalb des Kombisystems installiert und gleichzeitig ein zusätzliches Rohr benutzt wird, um auch bei einer Rohrbiegung den Druck zur Siphonwirkung entstehen zu lassen.

Die oben genannten Patente schlagen zwar verschiedene Ablasssysteme zur Drainage des Kondenswassers vor, aber das in dieser Anleitung beschriebene Drainagesystem kommt im Stand der Technik nicht vor.

### Kurzbeschreibung der Erfindung

Das Hauptziel der Erfindung zur Beseitigung der Nachteile des Stands der Technik ist, die ununterbrochene Drainage des Kondenswassers im Heizsystem zu gewährleisten.

Ein weiteres Ziel der Erfindung ist, die Drainage des Kondenswassers trotz der Druckveränderungen im Siphonrohr zu gewährleisten. Insbesondere soll das Kondenswasser abgelassen werden, bevor es die Kondensationshöhe erreicht, die das Heizsystem zum Stillstand bringt.

Ein weiterer Vorteil der Erfindung ist, dass gewährleistet wird, dass das System sich schließt, ohne dass Flüssigkeiten in das Heizsystem bis zur Kondensationshöhe (c) eintreten, wenn - außer bei Biegung der Siphonrohre - die Rohre bei Ansammlung von Schmutz, Kalk etc. ganz verstopft werden. Somit wird zudem gewährleistet, dass das Gerät den EN-Normen entspricht.

Ein weiteres Ziel der Erfindung ist, zu verhindern, dass das Gerät dadurch zum Stillstand kommt, dass die Drainage des Kondenswassers einwandfrei funktioniert. Dadurch werden die Wartungs- und Servicekosten sinken, unnötige Arbeitskosten und Zeitverluste werden vermieden. Zudem werden die Kundenbeschwerden zurückgehen, weil negative Umstände beseitigt werden.

Zum Erreichen oben genannter Ziele betrifft die Erfindung ein an den Kondensationswärmetauscher angeschlossenes Ablasssystem mit einem Siphon und mit mindestens einem daran angeschlossenen Siphonrohr zum Ablass der Kondensflüssigkeit des Wärmetauschers, dadurch gekennzeichnet, dass es mindestens ein Kontrollrohr auf dem genannten Siphon umfasst.

Das Kontrollrohr, das Gegenstand der Erfindung ist, weist eine Mindestlänge auf, die sich aus der Gesamtzahl der Kondensationshöhe und Kontrollhöhe zusammensetzt.

Bei einer bevorzugten Ausführung der Erfindung weist dieses Kontrollrohr eine druckregulierende Kontrollöffnung auf. Diese Kontrollöffnung wird vorzugsweise mit Hilfe des Luftdrucks (Patm) immer in offener Position gehalten, um den Druck im Siphonrohr zu regulieren.

Die Erfindung ist zugleich ein Heizsystem, das das Ablasssystem mit den oben erwähnten Eigenschaften umfasst.

Die Erfindung betrifft ein Ablasssystem zum Ablass des Kondenswassers bei einem Heizsystem mit einem Kondensationswärmetauscher und Ablasssystem, dadurch gekennzeichnet, dass es das Stillstandrisiko der Anlage aufgrund der Rohrbiegungen am Siphonrohr dadurch verhindert, dass der Unterdruck am Siphonrohr reguliert wird.

Bei einer bevorzugten Ausführung der Erfindung wird der Unterdruck, der den Ablass des Kondenswassers verhindert, durch mindestens ein Kontrollrohr, das auf dem Siphon des Ablasssystems montiert wird, reguliert.

Bei einer bevorzugten Ausführung der Erfindung ist das Kontrollrohr durch die Kontrollöffnung zur Regulierung des Drucks offen und verwendet den Luftdruck (Patm).

Die strukturellen und charakteristischen Eigenschaften sowie alle Vorteile der Erfindung werden durch die nachfolgenden Abbildungen und detaillierten Erklärungen, die auf diese Abbildungen verweisen, noch verständlicher. Aus diesem Grund soll die Bewertung unter Berücksichtigung dieser Abbildungen und detaillierten Erklärungen erfolgen.

### Kurzbeschreibung der Abbildungen

Die strukturellen und charakteristischen Eigenschaften der Erfindung werden durch die nachfolgenden Abbildungen und detaillierten Erklärungen, die auf diese Abbildungen verweisen, noch verständlicher. Aus diesem Grund soll die Bewertung unter Berücksichtigung dieser Abbildungen und detaillierten Erklärungen erfolgen, die die Anwendungsbeispiele für die Erfindung darstellen.

In diesen Abbildungen wird Folgendes dargestellt:
Abbildung 1 Schematische Darstellung des Ablasssystems, das Gegenstand der Erfindung ist, und des Wärmetauschers, mit dem es verbunden ist.
Abbildung 2 Schematische Darstellung, die das Arbeitsprinzip des Ablasssystems, das Gegenstand der Erfindung ist, unter normalen Bedingungen und bei einer möglichen Stauung zeigt.
Abbildung 3 Schematische Darstellung des Ablasssystems, das im Stand der Technik Anwendung findet, und des Wärmetauschers, mit dem es verbunden ist.

### Liste der Referenzsymbole

- 10: Heizsystem
- 20: Kondensationswärmetauscher
21 Brennkammer
22 Kondensationskammer
23 Abgasrohr
24 Abgasaustritt
25 Drainagerohr
- 30: Ablasssystem
31 Siphon
32 Siphonrohr
33 Rohrbiegung
34 Kontrollrohr
35 Kontrollöffnung
36 Staubereich
- P:: Unterdruckbereich
- Patm:: Luftdruck
- c:: Kondensationshöhe
- h:: Kontrollhöhe

### Detaillierte Beschreibung der Erfindung

In dieser detaillierten Beschreibung wird das Ablasssystem (30), das Gegenstand der Erfindung ist, zum besseren Verständnis und ohne einschränkende Wirkung näher erläutert.

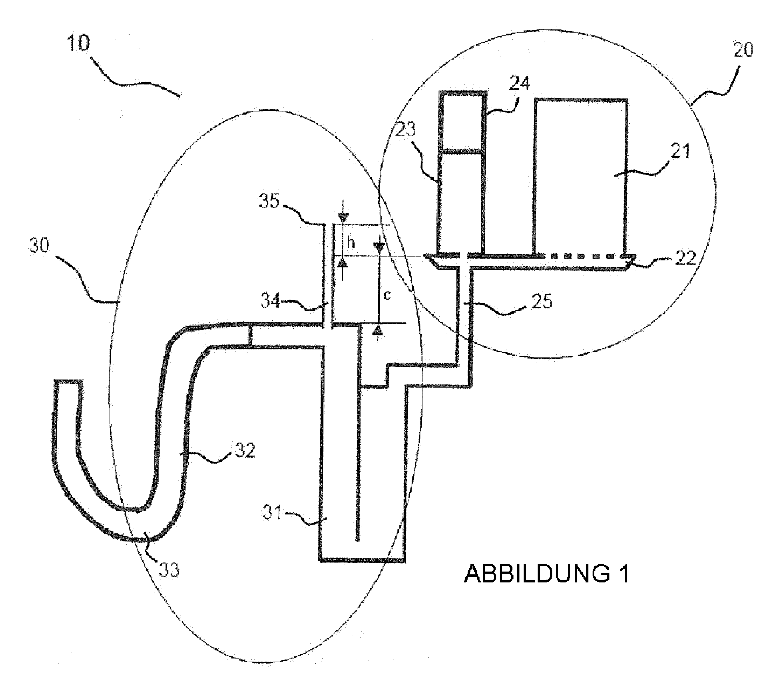

Wie in Abbildung 1 dargestellt, bildet das Ablasssystem (30) zusammen mit dem Kondensationswärmetauscher (20) ein Heizsystem (10). Dieser Kondensationswärmetauscher (20) enthält eine Brennkammer (21), ein Abgasrohr (23) zum Austritt der Gase aus der Brennkammer (21), eine Kondensationskammer (22), in der sich die Kondensflüssigkeit aus dieser Brennkammer (21) und dem Abgasrohr (23) ansammelt, und ein Drainagerohr (25), das unterhalb der Kondensationskammer (22) an die Kondensationskammer (22) angeschlossen wird.

In der Abbildung 1 ist eine Gesamtansicht des Ablasssystems (30), das Gegenstand der Erfindung ist, zu sehen. Demnach besteht das Ablasssystem (30) aus einem Siphon (31), das die Kondensationsflüssigkeit aus dem Drainagerohr (25) absaugt, aus einem an dieses Siphon (31) angeschlossenen Siphonrohr (32) und aus mindestens einem Kontrollrohr (34), das oberhalb dieses Siphons (31) - auf dem Siphon (31) - montiert wird.

Dieses Kontrollrohr (34) beseitigt den möglichen Unterdruck, der im Siphonrohr (32) wegen Rohrbiegungen (33) entstehen kann, mit Hilfe des Luftdrucks (Patm) und sorgt dafür, dass die Drainage des Wassers erfolgt. Dazu weist das Kontrollrohr (34) eine Kontrollöffnung (35) zum Lufteinlass auf. Diese Kontrollöffnung (35) kann so konzipiert werden, dass sie den direkten Lufteinlass ermöglicht oder aber den Druck im Kontrollrohr (34) reguliert.

Im Stand der Technik fließt die Kondensflüssigkeit in den Kondensationswärmetauscher (20), da die Drainage aus dem Heizsystem (10) wegen der Rohrbiegung (33) nicht richtig stattfindet. Erreicht die Flüssigkeit das Abgasrohr (23) und die Brennkammer (21), also die maximale Kondensationshöhe (c), so können die Verbrennungsprodukte nicht aus dem Kondensationswärmetauscher (20) ausgeschieden werden und das System (10) schaltet sich aus Sicherheitsgründen ab. Mit anderen Worten zeigt die Kondensationshöhe (c) in Abbildung 1 den maximalen Wasserfüllstand in der Kondensationskammer (22), über dem die Kondensflüssigkeit im Heizgerät (10) ein Risiko darstellt. Erreicht die Kondensflüssigkeit diesen Füllstand, ist es nicht mehr möglich, dass die Abgase, die im Wärmetauscher (21) entstehen, das Abgasrohr (23) erreichen.

Damit das Heizsystem (10) ununterbrochen und einwandfrei funktionieren kann, wird die Länge des Kontrollrohres (34) so konzipiert, dass die Kontrollöffnung (35) um die Kontrollhöhe (h) höher liegt als die Brennkammer (21), wie in Abbildung 1 dargestellt. Demnach entspricht die Länge des Kontrollrohres (34) der Summe der Kondensationshöhe (c) und der Kontrollhöhe (h). Die Kontrollhöhe (h) lässt sich nach der Kapazität des Systems (10) und der Kondensationsmenge einstellen.

Die Erfindung betrifft gleichzeitig ein Ablasssystem zum Ablass des Kondenswassers bei einem Heizsystem (10) und verhindert durch das Kontrollrohr (34) den Unterdruck aufgrund der Rohrbiegungen (33) am Siphonrohr (32) und dadurch das Stillstandrisiko, indem es den Unterdruck am Siphonrohr (32) reguliert. Dabei wird bevorzugt, dass die Kontrollöffnung (35) luftdurchlässig ist und den Luftdruck (Patm) verwendet. Die Druckregulierung kann jedoch auch durch andere Druckregulierungsvorrichtungen erfolgen, die an der Kontrollöffnung (35) des Kontrollrohres (34) angebracht werden oder die Kontrollöffnung (35) ersetzen können.

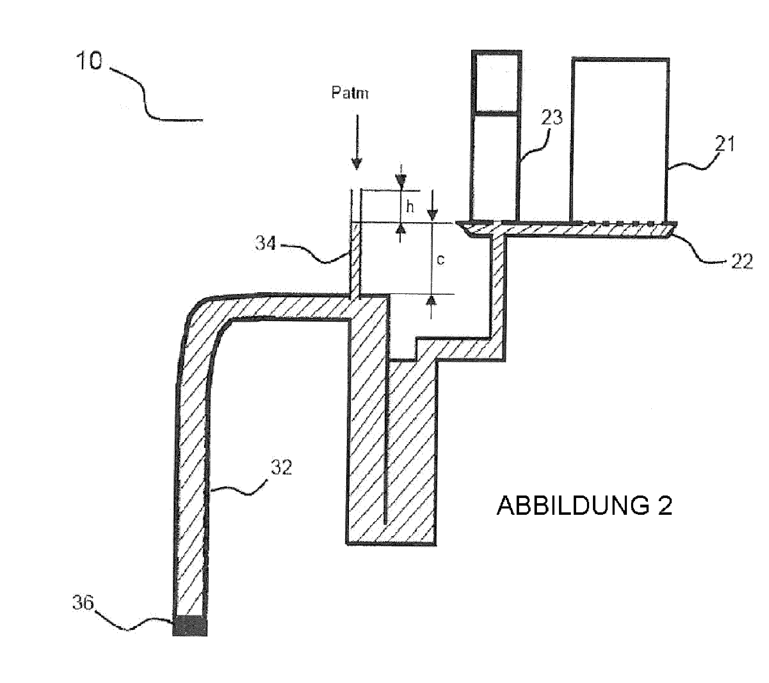

In Abbildung 2 wird ein anderes Problem dargestellt, das im Heizsystem (10) entstehen kann. Hier ist ein Staubereich (36) in den Siphonrohren (32) durch Schmutz, Kalk etc. entstanden und dadurch wird der Ablass des Kondenswassers vollständig verhindert. In diesem Fall sorgt das Kontrollrohr (34) dafür, dass das System (10) sicher schließt und verhindert, dass in das Heizsystem (10), in die Brennkammer (21) und in das Abgasrohr Wasser eintritt, da das Kontrollrohr um die Kontrollhöhe (h) länger ist als die Kondensationshöhe (c).

## Patentansprüche

1. Ablasssystem (30) für einen Kondensationswärmetauscher (20) mit einem Siphon (31) und mit mindestens einem an den Siphon (31) angeschlossenen Siphonrohr (32) zum Ablass der Kondensflüssigkeit des Wärmetauschers (20), **dadurch gekennzeichnet, dass** es mindestens ein Kontrollrohr (34) auf dem genannten Siphon (31) vorgesehen ist.

2. Ablasssystem (30) gemäß Anspruch 1, **dadurch gekennzeichnet, dass** das Kontrollrohr (34) eine Mindestlänge aufweist, die sich aus der Summe der Kondensationshöhe (c) und Kontrollhöhe (h) zusammensetzt.

3. Ablasssystem (30) gemäß Anspruch 1, **dadurch gekennzeichnet, dass** dieses Kontrollrohr (34) eine druckregulierende Kontrollöffnung (35) aufweist.

4. Ablasssystem (30) gemäß Anspruch 3, **dadurch gekennzeichnet, dass** diese Kontrollöffnung (35) mit Hilfe des Luftdrucks (Patm) immer in offener Position gehalten wird, um den Druck im Siphonrohr (32) zu regulieren.

5. Heizsystem (10), das ein Ablasssystem (30) umfasst, gemäß einem der vorherigen Ansprüche.

6. Ablasssystem zum Ablass des Kondenswassers bei einem Heizsystem (10) mit einem Kondensationswärmetauscher (20) und Ablasssystem (30), **dadurch gekennzeichnet, dass** es das Stillstandrisiko der Anlage aufgrund der Rohrbiegungen (33) am Siphonrohr (32) dadurch verhindert, dass der Unterdruck am Siphonrohr (32) reguliert wird.

7. Verfahren zum Betreiben eines Ablasssystems gemäß Anspruch 6, dadurch charakterisiert, dass der Unterdruck, der den Ablass des Kondenswassers verhindert, durch mindestens ein Kontrollrohr (34), das auf dem Siphon (31) des Ablasssystems (30) montiert wird, reguliert wird.

8. Verfahren gemäß Anspruch 6 oder 7, **dadurch gekennzeichnet, dass** dieses Kontrollrohr (34) durch die Kontrollöffnung (35) zur Regulierung des Drucks offen ist und den Luftdruck (Patm) verwendet.
